Europäisches Patentamt

European Patent Office

Office européen des brevets

(19)

(11) Publication number: **0 170 713 B1**

# EUROPEAN PATENT SPECIFICATION

(12)

(45) Date of publication of patent specification: **06.11.91**   (51) Int. Cl.⁵: **G01N 25/48**

(21) Application number: **84109362.8**

(22) Date of filing: **07.08.84**

(54) Method and apparatus for the calorimetry of chemical processes.

(43) Date of publication of application:
**12.02.86 Bulletin 86/07**

(45) Publication of the grant of the patent:
**06.11.91 Bulletin 91/45**

(84) Designated Contracting States:
**AT BE CH DE FR GB IT LI NL SE**

(56) References cited:
**EP-A- 0 051 266       DE-A- 2 355 952
DE-A- 3 115 807       FR-A- 2 195 348
FR-A- 2 484 088       US-A- 4 130 016**

**ATOMKERNENERGIE, vol. 19, no. 1, February
1972, pages 17-22; H. RAMTHUN et al.:
"Burn-up determination of irradiated fuels
by means of their heat output"**

**THE REVIEW OF SCIENTIFIC INSTRUMENTS,
vol. 38, no. 7, July 1967, pages 913-916; F.
KANBOUR et al.: "Solution calorimeter with
peltier cooling for operation at constant
temperature"**

(73) Proprietor: **AMERICAN CYANAMID COMPANY
1937 West Main Street P.O. Box 60
Stamford Connecticut 06904-0060(US)**

(72) Inventor: **Stockton, Gerald William
2 Hedgerow Drive
Morrisville Pennsylvania(US)**
Inventor: **Chidester, Dale Homer
17 Rockwood Road
Levittown Pennsylvania(US)**
Inventor: **Ehrlich, Susan Jeannette
35 Moro Drive
Hamilton Township New Jersey(US)**

(74) Representative: **Wächtershäuser, Günter, Dr.
Gewürzmühlstrasse 5
W-8000 München 22(DE)**

## Description

Chemical reactions are accompanied by the liberation or absorption of energy in the form of heat, and this "heat of reaction" is a definite, reproducible characteristic of a given chemical change. Morever, chemical reactions occur at widely differing rates of speed, and the characteristic time variation of the reaction rate is referred to as "reaction kinetics". The measurement of reaction heat and reaction kinetics is a fundamental part of the experimental development of large-scale chemical manufacturing processes, relating to the optimization and safety of the process and providing design parameters for the manufacturing facility. Any apparatus used for measuring heat is called a calorimeter and numerous prior-art calorimeters have been described covering a wide variety of specific applications. An example of a prior-art calorimeter applied to the study of chemical reactions is described in US-A-3994164.

US-A-4 130016 discloses an adiabatic calorimeter apparatus for measuring the energy change in a chemical reaction, which comprises an oven chamber, a reaction vessel which is positioned in the oven chamber and is adapted to contain one or more chemical reactants, the oven chamber containing a gas atmosphere which surrounds the reaction vessel, a jacket cover which is fitted to the reaction vessel and is in contact with the outer wall surface of the reaction vessel, a temperatur measuring means positioned in the reaction vessel, a temperature recorder unit which is electrically connected into the temperature measuring means, a first heater means which is positioned in the reaction vessel, a second heater means which is attached to an outer wall surface of the jacket cover, and a temperature controll system. A disadvantage of this apparatus is, that is cannot maintain isothermal conditions.

The invention herein described relates to a new and improved calorimeter designed and optimized for the study of chemical manufacturing processes on a laboratory scale. It is capable of providing accurate measurements of heats of reaction and instantaneous reaction rates. This apparatus offers superior performance and safety of use. The incorporation of a chemically inert, metallic reaction vessel rather than a glass vessel provides a greatly reduced thermal time constant due to the one-thousand fold higher thermal conductivity of the metal. This allows the calorimeter to respond more quickly to thermal fluctuations in the reaction mass, thus lowering the thermal detection threshold and raising the saturating heat flux level. The provision of a thermostatting mechanism for several chemical feed streams external to the reaction vessel provides accurate measurement of the characteristic reaction heat. In the absence of such a mechanism, the reaction mass will be heated or cooled due to the different temperatures of the chemical feed streams. This causes significant measurement errors. The provision of an adiabatic shield makes the present invention impervious to environmental temperature fluctuations, whereas the prior art calorimeter is sensitive to ambient temperature changes. From the point of view of operator safety, the present invention uses a five to ten-fold smaller reaction mass, avoids completely the use of fragile glass vessels, and provides an outstanding pressure relief mechanism of novel design with the largest possible vent orifice for the reaction vessel. These design qualities combine to create a superior calorimeter with a greatly reduced potential explosion hazard, providing a scientific instrument which can be operated with utmost safety in a conventional chemical laboratory. Therefore, the present invention constitutes an advance in the technology of reaction calorimetry and satisfies a need which exists in the art.

Subject matter of the present invention is a calorimeter for use in examining chemical processes according to claim 1.

Preferred embodiments of this apparatus are subject matter of claims 2 to 6.

A further subject matter of the present invention is a method according to claim 7 or 8 of operating the apparatus according to the present invention.

In accordance with this invention, a device for use in calorimetric analysis of chemical reactions comprises a cylindrical reaction vessel made of a chemically inert metal and equipped with a gas-tight cover, an agitator mechanism, a temperature sensor, a calibration heater, several inlet pipes, and a two-stage pressure relief mechanism. The reaction vessel is surrounded by an adiabatic shield to eliminate heat flow through the walls and cover of the vessel, thus minimizing thermal noise and errors due to undesired heat conduction paths. Heat can be added to or subtracted from the reaction mass to compensate for the heat of reaction and hold the system isothermal by use of a heat exchanger located under the flat base of the reaction vessel. This heat exchanger comprises a thin insulated metal foil resistive heater attached to a rigid metal plate, the underside of which is cooled by a circulating fluid flowing at a very high rate and maintained at a constant temperature below that of the reaction mass. The electrical power dissipated in the control heater is adjusted to exactly eliminate heat flow from the vessel to the circulating fluid heat sink and to maintain constant the temperature of the reaction mass. When the reaction begins, the power dissipation in the control heater is adjusted to offset the heat flux due to the heat of reaction. Thus, the change in the power dissipation in the control heater is linearly proportional to the rate at which heat is evolved or absorbed by the reaction, where the slope of this proportionality is related to the ratio of the thermal resistances between the heater and the circulating fluid and between the heater and the reaction mass, and the intercept depends upon the temperature differential between the vessel and the circulating fluid. Therefore, the characteristics of the calorimeter can be adjusted during design by selection of values for the above mentioned parameters to maximize sensitivity or, conversely, the saturating heat flux. The thermal characteristics of the calorimeter are further controlled and adjusted by selection of materials of high and low thermal impedance and appropriate dimensions to channel the flow of heat in a desired direction, and, also by the use of thermal barriers such as the aforementioned adiabatic shield.

In the preferred embodiment of the invention, a digital computer is commissioned to acquire the thermal measurements and provide control of the electrical power supplied to the various heat exchanger devices, as well as controlling the delivery of feedstocks and the agitation rate, and performing the calculation and graphical presentation of thermal and kinetic results. In an alternative embodiment of the invention, an analog controller is used in each area where electronic control is required, and the measurements are displayed on an analog recording device.

The design of the preferred embodiment of the invention is optimized for isothermal operation, as heretofore described. However, both adiabatic and temperature scanning modes of operation are also possible. In the isothermal mode, heat is removed from or added to the reaction mass to offset the heat of reaction and maintain the temperature constant. In the adiabatic mode, heat flow to or from the reaction mass is prevented, the heat of reaction remains in the reaction mass, and the temperature of the reaction mass is allowed to rise exponentially as dictated by the thermodynamics and kinetics of the reaction, by tracking the reaction temperature with the adiabatic shield and circulating oil temperatures. In the temperature scanning mode, the temperature of the reaction mass is increased in a stepwise, linear, or other predetermined fashion as required, by raising the temperature of the circulating fluid and adiabatic shield according to a temperature program.

FIGURE 1 is a schematic illustration of the mechanical arrangement of the exemplary embodiment of the inventive apparatus, in a cross-sectional view.

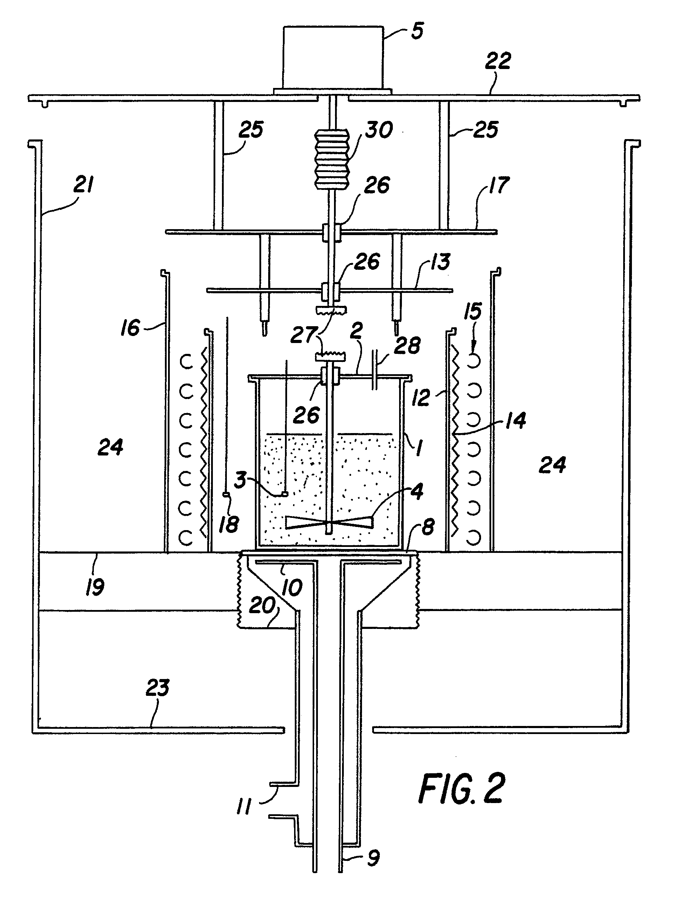

FIGURE 2 is an illustration of the facile means of assembly and disassembly of the apparatus through the connection of the various covers and gear coupling of the agitator drive shafts.

FIGURE 3 is a block diagram of the interconnection of the electronic control and measurement components in the preferred embodiment of the invention.

FIGURE 4 is a graphical illustration of the linear response of the control heater power as a function of the power dissipated in the calibration heater of the apparatus.

FIGURE 5 is a graphical illustration of a typical use of the apparatus in the study of a rapid acid-base reaction.

FIGURE 6 is a graphical illustration of a slow organic reaction conducted in the apparatus.

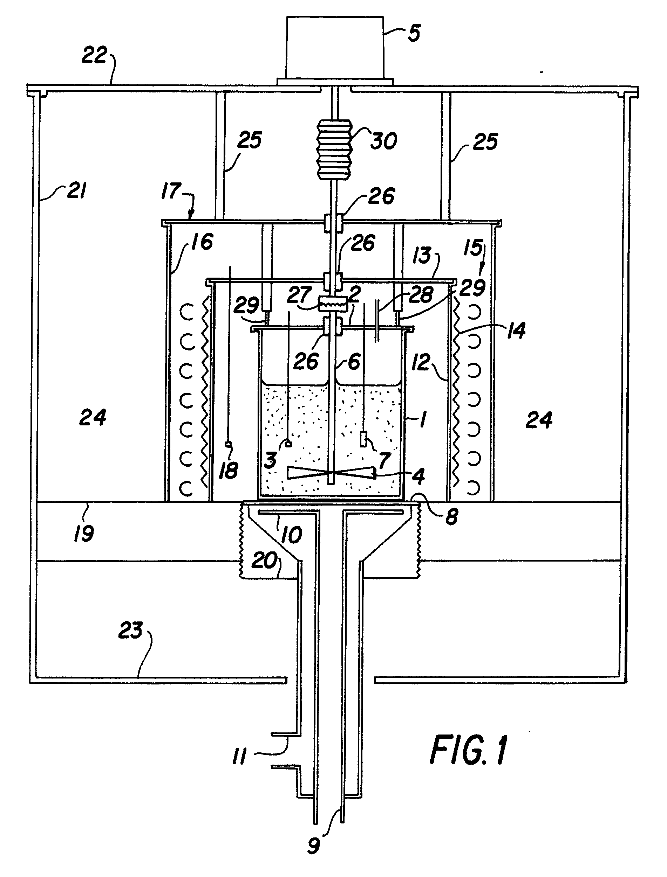

The chemical reaction calorimeter was fabricated on a design principle of cylindrical symmetry, as shown in FIGURE 1. Viewed from above, the device appears as a set of concentric metal canisters acting as thermal barriers serving different purposes as discussed below. The heart of the calorimeter is a removable reaction vessel, (1), and its cover, (2), which are fabricated from a chemically resistant metal. In the prototype calorimeter, zirconium was used to ensure corrosion resistance to strong mineral acids and bases. The reaction vessel is equipped with a number of devices which are attached to the cover, (2). A high-precision platinum resistance thermometer (RTD), (3), is used to sense the temperature of the reaction mass with a resolution of $5 \times 10^{-4}°C$ The reaction mixture is stirred by an agitator blade, (4), driven by a stepping motor, (5), through a shaft, (6). The vessel contains a resistive heater, (7), used in the calibration of the calorimeter.

The temperature of the reaction mass is carefully regulated by a heat exchanger device made up of heating and cooling elements. This design principle of simultaneous heating and cooling is used in all thermostated regions of the calorimeter to ensure superior temperature control and a short thermal time constant. The vessel's heating is achieved by a circular metal foil resistance heater insulated with 0.00254 cm (0.001 inch) polymer film, and bonded to the topside of a metal disk, (8). The underside of the metal plate, (8), is cooled by a circulating fluid (low viscosity silicone oil in the prototype) flowing from an inlet pipe, (9), flowing radially through the gap between the two circular plates, (8) and (10), and discharging from the outlet pipe (11). The circulating fluid, serving as a heat sink, is supplied from and returned to a reservoir which is simultaneously heated and refrigerated to provide excellent temperature regulation. The constant temperature difference between the circulating oil and the chemical reaction mass is an important design parameter, as discussed below.

All heat flow to or from the reaction vessel takes place by conduction through its flat base, which is in intimate contact with the heat exchanger mechanism. Heat flow through the walls and cover of the vessel is

EP 0 170 713 B1

effectively eliminated by the provision of an adiabatic shield, which maintains the temperature of the space surrounding the reaction vessel equal to the temperature inside the vessel. The adiabatic shield is an air oven contained within a metal canister, (12) , and its cover, (13). An insulated foil heater, (14) , is bonded to the outer wall of canister, (12), and is cooled by compressed air flowing from numerous ducts, (15). The cooling air is contained by a second canister, (16), and cover, (17), and exhausted through a vent pipe (not shown). The temperature of the air space inside the adiabatic shield is sensed by a second platinum resistance thermometer (RTD), (18), and maintained at the temperature of the chemical reaction mass by electronic control.

The heat exchanger mechanism and adiabatic shield canisters are supported by a base block, (19), fabricated from polytetrafluoroethylene, chosen because of its high thermal impedance and suitability for high temperature operation. The body of the heat exchanger, (20), is also made of this material. The entire calorimeter is housed in an outer metal shell, (21), equipped with a cover, (22), and base, (23). The space inside this shell is filled with glass fiber insulation, (24).

The assembly and disassembly of the calorimeter is extremely simple since the inner covers, (13) and (17), are attached to the outer cover, (22), by tubular stand-offs, (25). Thus, all three covers are removed and inserted as a single assembly, as shown in FIGURE (2). The agitator shaft, (5), which is supported by integral needle bearings and lip seals, (26), is broken just above the reaction vessel cover, (2), and rejoined by a gear-tooth coupler, (27). The upper gear of the coupler is removed with the outer and inner covers, (13), (17) and (22), and drive motor, (5), and shaft, (8). The lower gear of the coupler is attached to the lower shaft and remains with the reaction vessel, (1), which can be removed separately.

During operation of the calorimeter, fluid chemicals can be added sequentially or simultaneously to the reaction vessel through multiple inlet pipes, (28). The temperature of these "titrants" is pre-equilibrated in a tubular heat exchanger (not shown) which is in intimate contact with the adiabatic shield canister, (12). This heat exchanger is a stainless steel pipe coiled and bonded to the inside of the canister, and a separate pipe is used for each reactant. The chemicals are mechanically pumped from external reservoirs through the equilibration pipes and into the reaction vessel.

Pressure relief venting of the reaction vessel is achieved on two levels. A small spring loaded relief valve (not shown in FIGURE 1) is installed in the cover, (2), and provides a 1/8 inch (1 inch = 2,54 cm) diameter vent to relieve small overpressures. In the event of a large overpressure exceeding the capacity of the primary vent, the entire cover, (2), of the reaction vessel will move upwards, providing the largest possible vent orifice. The movement of the cover is made possible by the spring loaded cover retainers, (29), and the bellows coupling, (30), for the agitator shaft. The vented vapours exit through pipes in the base of the calorimeter (not shown in FIGURE 1).

In the preferred embodiment of the calorimeter, all control and measurement functions are performed using a digital computer to simplify operator interaction and to provide flexibility in the design and application of the control algorithms. In addition, a microprocessor-based controller was incorporated to facilitate timing, switching, and control functions, as well as communication to the host computer.

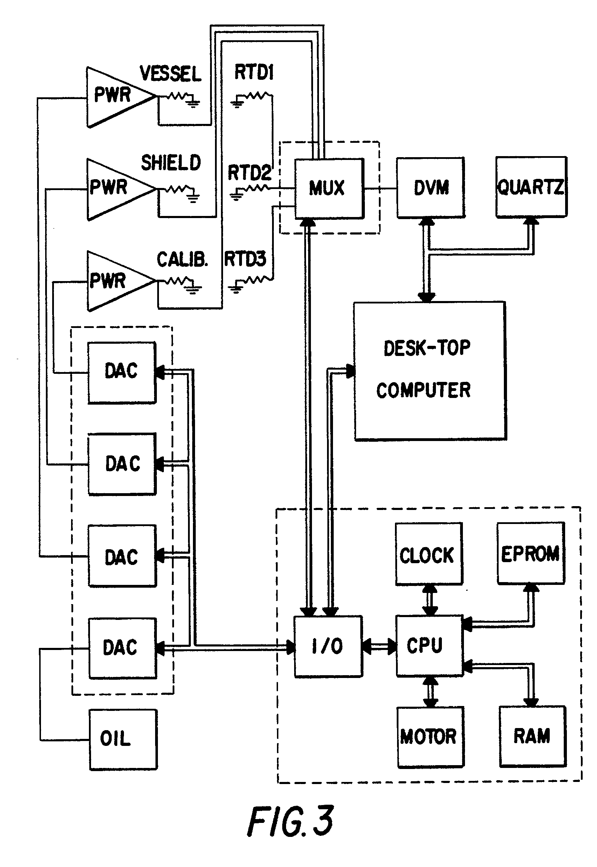

FIGURE 3 illustrates the block diagram for the electronic control system. Two different digital interface buses are used: the 16-bit parallel interface allows communication between the computer and the microprocessor, while a standard IEEE-488 interface (8-bit parallel/byte serial) was used for communication between the computer and several peripheral devices supplied with this interface protocol.

The microprocessor controller comprises a central processing unit (CPU), a real time clock/interrupt generator, (CLOCK), a digital interface controller (I/O), a relay multiplexer (MUX), four high stability digital to analog converters (DAC), random access memory (RAM), and erasable programmable read only memory (EPROM). The microprocessor provides a convenient means of implementing the interconnection and switching of system components. The acquisition of data, decision making and control functions are performed independently by the digital computer.

A high precision digital voltmeter is used to make voltage and resistance measurements throughout the system, and is switched between the various input lines by the relay multiplexer (MUX) under computer control. The resistance measurements of the platinum RTD's are true 4-wire measurements with D.C. offset compensation for junction effects, providing a resistance thermometer resolution of $5 \times 10^{-4}$°C. The platinum RTD's are calibrated against a Quartz reference thermometer (QUARTZ) with an NBS traceable response curve. Power dissipation in the various resistance heaters is determined by measuring the applied voltage across the heater and multiplying by the current flowing in the circuit. The current is measured independently as the voltage across a precision series current sense resistor divided by its known resistance. Thus, the power measurements are absolute with very high precision.

Electrical power to the heaters is supplied by three programmable power supplies, which are programmed from the computer via three of the four DAC's. The fourth DAC is used to control and program

4

the oil bath temperature. These 16-bit DAC's provide a control resolution of $2^{16}$ or one part in 65,536.

For the calorimeter described above to provide quantitative thermochemical information, regardless of whether the operating mode is isothermal or temperature scanned, it is necessary for the temperature difference between the chemical reaction mass and the circulating oil heat sink to remain constant. The operation under isothermal conditions is most easily understood. If the temperature set point for the reaction is $T_r$ and that for the oil bath $T_o$, then $T_r > T_o$ and the difference $\Delta T_o = T_r - T_o$ is positive and constant. If the thermal resistance between the heater and the circulating oil is $R_o$ (deg.Watt$^{-1}$), then the power dissipation $q_h$ in the control heater (part 8 in FIGURE 1) is given by:

$$q_h = \frac{T_r - T_o}{R_o} \qquad (1)$$

Under these steady state conditions, no heat will flow into or out of the reaction vessel and Tr will remain constant. The value of $q_h$ given by Equation (1) represents the baseline for the experiment at a point where no reaction is occurring.

When heat is generated in the reaction vessel at a rate $q_r$, due to either chemical reaction or applying electrical power to the calibration heater (part 7 in FIGURE 1), this heat must be quickly removed to avoid raising the temperature of the reaction mass. The only available conduction path for heat dissipation is through the bottom of the reaction vessel, through the control heater, into the rapidly circulating oil, and eventual dissipation in the oil reservoir refrigeration system. If the thermal resistance between the reaction mass and the heater is $R_r$, then:

$$T_r - T_o = q_r (R_r + R_o) + q_h R_o \qquad (2)$$

Equation (2) rearranges to:

$$\frac{T_r - T_o}{R_o} - q_h = q_r \left(1 + \frac{R_r}{R_o}\right) \qquad (3)$$

Since equation (1) indicates that the baseline $q_h$ when $q_r = 0$ is $(T_r - T_o)/R_o$, then the change in $q_h$ when $q_r \neq 0$ is given by the left hand side of Equation (3). Thus,

$$\Delta q_h = q_r \left(1 + \frac{R_r}{R_o}\right) \qquad (4)$$

Equation (4) suggests that the change in power dissipation in the control heater, $\Delta q_h$, is linearly proportional to the heat generated in the reaction, $q_r$, with a slope determined by the ratio of the thermal resistances $R_r$ and $R_o$ and an intercept of zero. Thus, it is apparent that the heat of a chemical reaction $\Delta H_r$ can be measured by integrating the change in power dissipation in the control heater during the course of the reaction:

$$\Delta H_r = K \int_o^\infty \Delta q_h \cdot dt \qquad (5)$$

where the constant $K = R_o/(R_o + R_r)$ is determined during the electrical calibration of the calorimeter.

These observations lead to a number of interesting speculations. The maximum power dissipation in the calorimeter is limited by $R_o$, which should be minimized for a reasonable $\Delta T_o$. The thermal sensitivity of the calorimeter is maximized by making the ratio $R_r/R_o$ large, so that a small reaction heat $q_r$ produces a large

change in the control heater power $q_h$. On the other hand, making $R_r/R_o$ small maximizes the heat flux that can be handled by the calorimeter. Since the ratio of the thermal resistances $R_r/R_o$ is adjustable during the fabrication of the calorimeter, an instrument with any desirable characteristic can be constructed.

The dynamic characteristics of the calorimeter can be deduced by constructing a formulation for a resistance/capacitance equivalent circuit which contains an exponential term $[(I-\exp(-t/T)]$, where $T$ is the system time constant. However, as discussed below, the response of the calorimeter is not limited by this natural time constant due to the use of a control algorithm which gives a greatly reduced effective time constant.

The computer program used to control the calorimeter acquires the temperature measurements from the various sensors, relates the actual temperatures to the desired temperatures (set points), and causes the appropriate response to correct any differences. The mathematical relationship between the error signal $\Delta T$ (= set point - actual temperature) and the corresponding power level in the particular control heater is called the control algorithm. For the adiabatic shield, a conventional PID (proportional/integral/derivative) algorithm is used and found to be satisfactory. The functional form of this algorithm is:

$$q_h = K_2 \cdot \Delta T_s + K_2 \int_0^\infty \Delta T_s \cdot dt + K_3 \cdot \frac{d(\Delta T_s)}{dt} \qquad (6)$$

Where $\Delta T_s$ is the error signal for the adiabatic shield.

The coefficients of the three terms in Equation (6), $K_1$, $K_2$, and $K_3$, were optimized experimentally to give a rapid response with minimum overshoot and ringing. The use of the PID algorithm "forces" the calorimeter to respond more quickly than the natural time constant would suggest. The effective time constant can be made a small fraction of the natural constant by adjustment of the coefficients in Equation (6).

The control algorithm for the vessel control heater is novel and was found by experience to give the best control. A PI type of algorithm (no derivative term) with a quadratic dependence on the vessel error signal $\Delta T_c$ was used:

$$q_h = K_3 \cdot \Delta T_c \cdot |\Delta T_c| + K_4 \int_0^\infty \Delta T_c \cdot |\Delta T_c| \, dt \qquad (7)$$

where $|\Delta T_c|$ signifies the absolute value of the error signal.

The effect of this algorithm is to make the heater power $q_h$ essentially constant when $\Delta T_c$ is insignificantly small, but to change $q_h$ more rapidly for larger $T_c$'s than a linear dependence would allow. The consequence of this approach is a noise-free baseline (constant $q_h$) and very rapid return to the set point temperature following a thermal disturbance (e.g., reaction onset). In order to make the thermal responses identical during heating and cooling cycles, different values of the coefficients $K_3$ and $K_4$ were used for positive and negative error signals, $\Delta T_c$. This effectively compensates for the different efficiencies of the heating and cooling elements of the control device.

The operation of the chemical reaction calorimeter is based on a power compensation principle. In order to establish the validity of the heat generation data provided by the calorimeter, it was necessary to determine the linearity of the controller response by calibration and to determine the accuracy of the heat flow measurement by examination of a known chemical system.

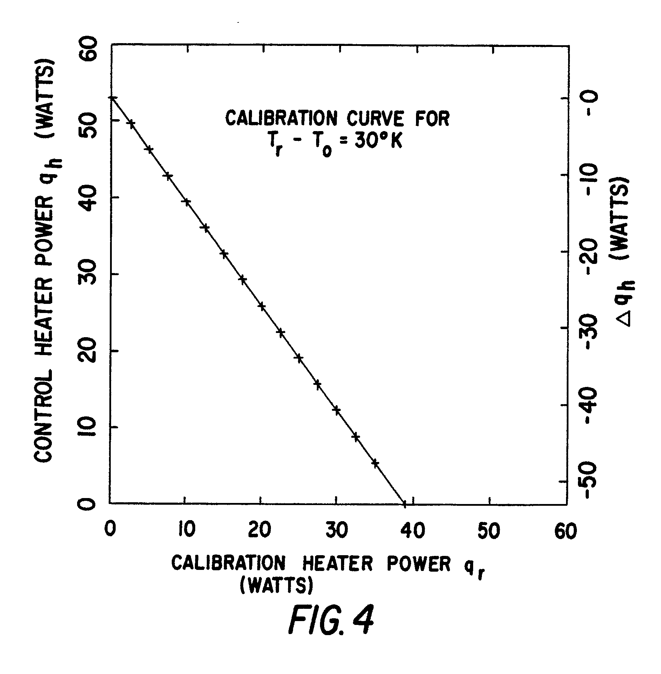

The linearity of the controller power response was determined using a vessel which contained 150 g of water. In this experiment the temperature difference between the reaction vessel and circulating fluid was maintained at 30K. Electrical power was applied to the calibration heater over a range of 0 to 40 watts. The power response of the control heater was found to be a linear function of calibration heater power, as shown in FIGURE 4. The composite thermal resistances, $R_o$ and $R_r$ can be deduced from the slope of this calibration plot and the baseline power $q_h$.

$$R_o = \frac{T_r - T_o}{q_h} \qquad (8)$$

$$R_r = R_o \left[ \frac{\Delta \dot{q}_h}{q_r} - 1 \right] = R_o \times (slope - 1) \qquad (9)$$

The value of the calibration constant K (see Equation 5) is:

$$K = \frac{R_o}{R_o + R_r} = \frac{1}{slope} \qquad (10)$$

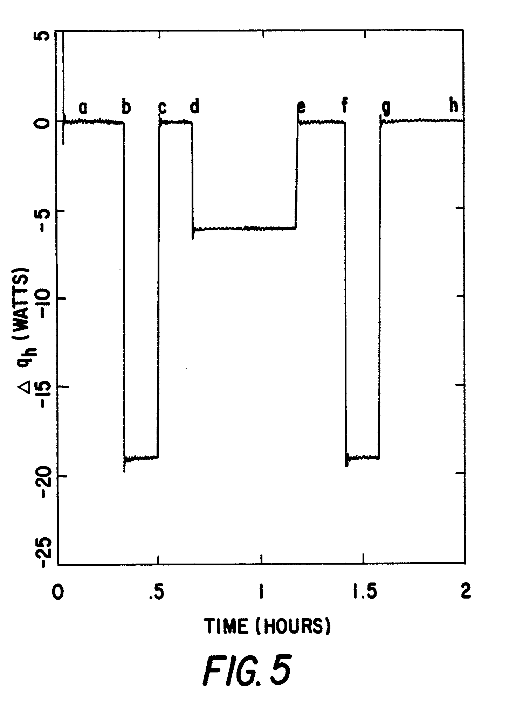

The performance of the calorimeter was tested by examination of an acid-base neutralization reaction. Four replicate determinations of the enthalpy of neutralization of tris-(hydroxymethyl) aminomethane (TRIS) and hydrochloric acid yielded a mean experimental value of $\overline{-11.55}$ kcal/mole, which is in excellent agreement with the reported literature value, -11.55 kcal/mole (I). A typical plot of time vs controller power for this experiment appears in FIGURE 5.

$(HOCH_2)_3CNH_2 + HCl \rightarrow (HOCH_2)_3C_N^+ H_3 + Cl^-$

TRIS

The regions of the plot delineated by a-b, c-d, e-f, and g-h represent the baseline for the experiment. The power excursions in regions b-c and f-g are due to electrical power dissipated in the calibration heater, and the response in region d-e is due to the acid-base neutralization reaction. Because the rate of this proton-exchange reaction is extremely fast relative to the response time of the calorimeter, a boxcar power response curve is obtained with edges corresponding to the start and finish of the titration. Thus, kinetic analysis is not pertinent for this reaction.

Verification of the performance of the calorimeter has been obtained for an organic chemical reaction in a non-aqueous system. The heat of reaction for the ethanolysis of acetic anhydride using p-toluene sulfonic acid (p-TSA) as a catalyst has been determined as -14.38 kcal/mole in four experiments.

$$CH_3\overset{O}{\underset{\|}{C}}-O-\overset{O}{\underset{\|}{C}}-CH_3 \ + \ CH_3CH_2OH \ \xrightarrow{p-TSA} \ CH_3\overset{O}{\underset{\|}{C}}-OCH_2CH_3 \ + \ CH_3\overset{O}{\underset{\|}{C}}-OH$$

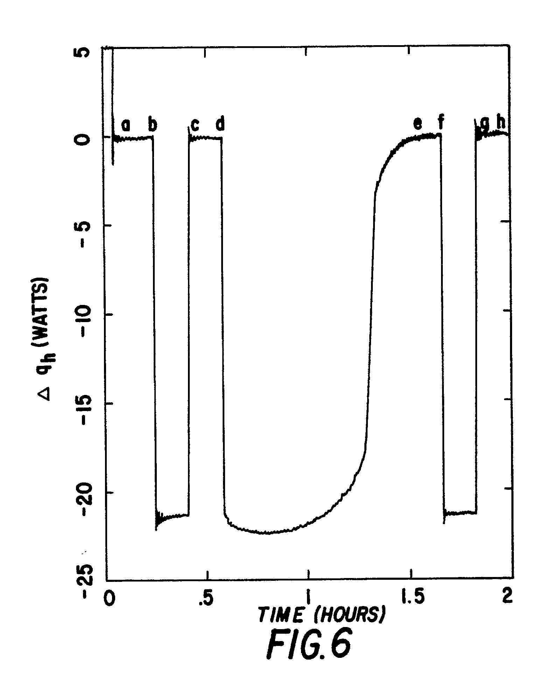

An experimentally determined heat of reaction has not been reported in the literature. However, the heat of reaction has been estimated as -14.26 kcal/mole using the computation method of Handrick based on averaged functional group contributions to the heat of combustion of organic compounds (2). The time vs heat flow curve is given in FIGURE 6.

As in the previous example, electrical calibration pulses are applied before and after the reaction, which occurs during region d-e. The onset of the power excursion is rapid and a plateau is reached determined by the rate of addition. However, as reagents are consumed, the reaction slows down and the power response decreases. After the reagent addition is complete, the reaction continues for some time with second-order kinetics and the power response decays in concert with this rate law. Analysis of the power curve yields the second-order rate constant for the reaction.

**Claims**

1. A calorimeter for use in examining chemical processes comprising:

   a. A flat-bottomed chemically inert metal reaction vessel(1)equipped with a gas-tight cover (2), an agitator mechanism (4,5,6), a temperature sensor (3), a calibration heater (7), several chemical inlet ports, and a two-stage pressure relief mechanism;

   b. A heat exchanger in intimate contact with the base of said reaction vessel to regulate heat flow to or from the vessel (1) and its reaction mass, where said heat exchanger comprises an electrical heater attached to a circular metal plate (8) which is cooled by a fluid circulating at a definite temperature;

   c. An adiabatic shield to prevent uncontrolled heat leakage from the vessel, where said adiabatic shield comprises a cylindrical barrier (12,13) surrounded by an electrical heater (14) and cooled by a flowing gas, and equipped with a temperature sensor (18);

   d. An incubation mechanism to equilibrate the temperature of the chemical feed streams, comprising a tubular heat exchanger attached to said adiabatic shield and in close thermal contact with same;

   e. A facile means to assemble and disassemble the apparatus and to gain access to the reaction vessel (1) wherein the various covers to the cylindrical chambers are connected as a single assembly and the agitator drive shaft (6) is separated in two parts which are coupled by a gear-tooth coupler (27);

   f. A reservoir for said circulation fluid equipped with a pump, a heater, a refrigeration system, and a temperature sensor;

   g. An electronic regulation means responsive to said temperature sensors and adapted to control the temperatures of the reaction mass, $T_r$, the adiabatic shield, $T_s$, and the circulating fluid, $T_o$, comprising a controller which regulates the balance between heating and cooling by adjusting the power dissipated in the heating element while under constant cooling from the cooling element, in each control device b, c, and f aforementioned.

2. The apparatus of Claim 1, wherein said heat exchanger comprises a flat circular insulated foil heater (14) bonded to a supporting plate (8) which is cooled by a fluid flowing radially between the said plate (8) and a second plate (10), from the center to the edge or vice versa, wherein the cooling efficiency of the fluid is unvaried and the heating efficiency of the heater is adjusted to regulate the temperature of the reaction mass contained within said vessel.

3. The apparatus according to Claim 2, wherein said adiabatic shield comprises a covered cylindrical chamber (12,13) wrapped with a bonded foil heater (14) and cooled uniformly by pressurized gas flowing from numerous ducts (15) surrounding said adiabatic shield, and the balance of heating and cooling maintains the temperature within said chamber equal to the temperature of the reaction mass.

4. The apparatus according to Claim 3, wherein the temperature of one or more chemical feedstreams is equilibrated with the reaction mass already within the vessel by use of tubular heat exchangers bonded to the interior surface of the adiabatic shield in intimate thermal communication with the heating and cooling mechanisms of said adiabatic shield.

5. The apparatus according to Claim 2, wherein the cooling fluid is supplied by a reservoir equipped with a circulatory system and a temperature regulation mechanism comprising a temperature sensor, an electrical heater, and a refrigeration system, manifesting suitable means to closely regulate the temperature of the circulating fluid.

6. The apparatus according to Claim 1, wherein excessive pressure build up can be relieved by a two-stage mechanism comprising:

   a. A small adjustable valve, located in the cover (2) of the reaction vessel (1), providing a vent orifice of 0.317cm diameter to relieve small overpressures, and;

   b. A collapsible retaining mechanism for the cover of the reaction vessel comprising spring loaded retainers (29) for the cover (2) and a bellows-coupling (30) for the agitator shaft (6), which combine to permit verticle displacement of the said cover (2) and said shaft (6) to provide the largest possible vent orifice to relieve large overpressures and ensure utmost safety during operation of the calorimeter.

7. A method of operating the apparatus of Claim 1, wherein the temperature difference between the oil reservoir and chemical reaction mass is maintained constant by a heat exchanger working in concert with a temperature regulating mechanisam and circulatory system, wherein the temperature of the reaction mass is either held constant or forced to follow a prescribed variation, and during which the heat of reaction and reaction kinetics are measured by the proportional adjustment of the power dissipation in the electrical control heater located in said heat exchanger.

8. A method of operating the apparatus of Claim 1, wherein the electrical power dissipation, $q_h$, in the control heater located in the heat exchanger is regulated in proportion to the signed square of the temperature error signal ,$\Delta T$, plus the time integral of the signed square of the temperature error signal, wherein said temperature error signal is the difference between the instantaneous temperature of the chemical reaction mass and the specified temperature set point, in accordance with the relationship:

$$q_h = K_1 \cdot \Delta T \cdot |\Delta T.| \quad + \quad K_2 \int_0^\infty \Delta T \cdot |\Delta T| \, dt$$

where $K_1$ and $K_2$ are constants of different magnitude for positive and negative temperature error signals and $|\Delta T|$ signifies the absolute value of the temperature error signal.

## Revendications

1. Calorimètre destiné à être employé pour examiner des processus chimiques, comprenant :

    a. un réacteur à fond plat en métal chimiquement inerte (1), équipé d'un couvercle étanche aux gaz (2), d'un mécanisme d'agitation (4, 5, 6), d'un capteur de température (3), d'un dispositif de chauffage d'étalonnage (7), de plusieurs conduits d'alimentation en substance chimique, et d'un mécanisme de décompression à deux étages ;

    b. un échangeur de chaleur en contact intime avec le fond du réacteur, destiné à réguler le courant de chaleur vers ou à partir du réacteur (1) et sa masse réactionnelle, l'échangeur de chaleur comprenant un dispositif de chauffage électrique fixé à une plaque métallique circulaire (8) qui est refroidie par un fluide circulant à une température déterminée ;

    c. un écran adiabatique destiné à empêcher une perte de chaleur non contrôlée à partir du réacteur, cet écran adiabatique comprenant une barrière cylindrique (12, 13) entourée par un dispositif de chauffage électrique (14), et refroidie par un gaz en circulation, et équipé d'un capteur de température (18) ;

    d. un mécanisme d'incubation destiné à équilibrer la température des courants d'alimentation en substances chimiques, comprenant un échangeur de chaleur tubulaire fixé à l'écran adiabatique, et en contact thermique intime avec celui-ci ;

    e. des moyens d'assemblage et de désassemblage faciles de l'appareil permettant d'accéder au réacteur (1), les divers couvercles des chambres cylindriques étant reliés sous la forme d'un unique ensemble, et l'arbre d'entraînement de l'agitateur (6), étant séparé en deux parties reliées par un dispositif d'accouplement à engrenage (27) ;

    f. un réservoir pour le fluide de circulation, équipé d'une pompe, d'un dispositif de chauffage, d'un système de réfrigération et d'un capteur de température ;

    g. des moyens de régulation électroniques, sensibles aux capteurs de température et adaptés à réguler la température $T_r$ de la masse réactionnelle, la température $T_s$ de l'écran adiabatique et la température $T_o$ du fluide en circulation, comprenant un dispositif de commande qui régule l'équilibre entre le chauffage et le refroidissement, en ajustant la puissance dissipée dans l'élément chauffant et en refroidissant de manière constante avec l'élément de refroidissement, dans chaque dispositif de régulation b, c et f mentionné ci-dessus.

2. Appareil selon la revendication 1, dans lequel l'échangeur de chaleur comprend un dispositif de chauffage à feuille métallique plate circulaire isolée (14), fixé à une plaque de support (8) refroidie par un fluide circulant radialement entre la plaque (8) et une deuxième plaque (10), à partir du centre vers le bord ou vice-versa, et dans lequel l'efficacité de refroidissement du fluide est constante, et l'efficacité de chauffage du dispositif de chauffage étant ajustée pour réguler la température de la masse réactionnelle contenue dans le réacteur.

3. Appareil selon la revendication 2, dans lequel l'écran adiabatique comprend une chambre cylindrique

9

fermée par un couvercle (12, 13), enveloppée par un dispositif de chauffage à feuille métallique fixée (14), et refroidie uniformément par un gaz sous pression circulant à partir de nombreux conduits (15) autour de l'écran adiabatique, et l'équilibre entre chauffage et refroidissement, maintenant la température dans la chambre, à une température égale à celle de la masse réactionnelle.

4. Appareil selon la revendication 3, dans lequel la température d'un ou plusieurs courants d'alimentation en substance chimique, est équilibrée avec la masse réactionnelle déjà dans le réacteur, en employant des échangeurs de chaleur tubulaires fixés à la surface intérieure de l'écran adiabatique, et en communication thermique intime avec les dispositifs de chauffage et de refroidissement de l'écran adiabatique.

5. Appareil selon la revendication 2, dans lequel le fluide de refroidissement est fourni par un réservoir équipé d'un système de circulation et d'un dispositif de régulation de température, comprenant un capteur de température, un dispositif de chauffage électrique, et un système de réfrigération, permettant de réguler étroitement de manière appropriée, la température du fluide en circulation.

6. Appareil selon la revendication 1, dans lequel la pression excessive accumulée, peut être libérée par l'intermédiaire d'un mécanisme à deux étages, comprenant :
a. un petit clapet ajustable situé dans le couvercle (2) du réacteur (1), ménageant un orifice de ventilation de 0,317 cm de diamètre, pour éliminer de faibles supressions ; et
b. un mécanisme de retenue escamotable du couvercle du réacteur, comprenant des organes (29) de retenue du couvercle (2) sollicités par un ressort, et un raccord à soufflet (30) de l'arbre d'agitation (6), permettant le déplacement vertical du couvercle (2) et de l'arbre (6), en ménageant le plus grand orifice de ventilation possible de façon à éliminer des surpressions importantes, et d'assurer une très grande sûreté de mise en oeuvre du calorimètre.

7. Procédé de mise en oeuvre de l'appareil selon la revendication 1, dans lequel la différence de température entre le réservoir d'huile et la masse réactionnelle de substances chimiques, est maintenue constante à l'aide d'un échangeur de chaleur coopérant avec un dispositif de régulation de température et un système de circulation, la température de la masse réactionnelle étant maintenue constante ou forcée de suivre une variation prédéterminée, au cours de laquelle la chaleur de réaction et la cinétique réactionnelle sont mesurées en ajustant proportionnellement la puissance dissipée dans le dispositif de chauffage électrique de régulation situé dans l'échangeur de chaleur.

8. Procédé de mise en oeuvre de l'appareil selon la revendication 1, dans lequel la puissance électrique dissipée $q_h$ dans le dispositif de chauffage de régulation situé dans l'échangeur de chaleur, est régulée proportionnellement au carré polarisé du signal d'erreur de température $\Delta T$ plus l'intégral en fonction du temps du carré avec signe du signal d'erreur de température, le signal d'erreur de température étant la différence entre la température instantanée de la masse réactionnelle de substances chimiques, et la température de consigne déterminée, conformément à la relation :

$$q_h = K_1 \cdot \Delta T \cdot |\Delta T| \quad + \quad K_2 \int \Delta T \cdot |\Delta T| \, dt$$

dans laquelle $K_1$ et $K_2$ représentent des constantes différentes pour des signaux d'erreur de température positif et négatif, et T représente la valeur absolue du signal d'erreur de température.

## Patentansprüche

1. Kalorimeter für die Verwendung bei der Untersuchung chemischer Prozesse, mit
a. einem Reaktionsgefäß (1) aus chemisch inertem Metall, das einen flachen Boden aufweist und mit einer gasdichten Abdeckung (2), einer Umwälzeinrichtung (4, 5, 6), einem Temperatursensor (3), einer Eich-Heizeinrichtung (7), mehreren chemischen Einlaßanschlüssen und einer zweistufigen Druckentlastungseinrichtung versehen ist,
b. einem in innigem Kontakt mit der Basis des Reaktionsgefäßes befindlichen Wärmetauscher für die Regulierung des Wärmeflusses zum oder vom Gefäß (1) und seiner Reaktionsmasse, wobei der

EP 0 170 713 B1

Wärmetauscher eine elektrische Heizeinrichtung aufweist, die an einer kreisförmigen Metallplatte (8) angebracht ist, die ihrerseits durch ein mit definierter Temperatur umlaufendes Fluid gekühlt wird,

c. einer adiabatischen Abschirmung zur Verhinderung eines unkontrollierten Wärmeabflusses vom Gefäß, die eine durch einen elektrischen Heizer (14) umgebene und durch ein strömendes Gas gekühlte zylindrische Barriere (12, 13) aufweist und mit einem Temperatursensor (18) ausgestattet ist,

d. einer Inkubationseinrichtung zum Vergleichmäßigen der Temperatur der chemischen Förderströme, die einen rohrförmigen Wärmetauscher aufweist, der an der adiabatischen Abschirmung angebracht ist und sich in engem thermischen Kontakt mit derselben befindet,

e. einer Einrichtung zum leichten Zusammenbauen und Auseinandermontieren des Geräts und zum Ermöglichen des Zugangs zu dem Reaktionsgefäß (1), wobei die verschiedenen Abdeckungen der zylindrischen Kammern als eine einzige Anordnung verbunden sind und die Rührer-Antriebswelle (6) in zwei über eine Zahnradkupplung (27) gekoppelte Teile aufgeteilt ist,

f. einem Reservoir für das Umlauffluid, das mit einer Pumpe, einem Heizer, einem Kühlsystem und einem Temperatursensor ausgestattet ist,

g. einer auf die Temperatursensoren ansprechenden und zur Steuerung der Temperaturen der Reaktionsmasse, $T_r$, der adiabatischen Abschirmung, $T_s$, und des umlaufenden Fluids, $T_o$, ausgelegten elektronischen Reguliereinrichtung, die eine das Gleichgewicht zwischen Heizen und Kühlen durch Einstellen der im Heizelement erzeugten Verlustleistung unter konstanter Kühlung durch die Kühlelemente in jeder der vorgenannten Steuervorrichtungen b, c, und f regelnde Steuereinrichtung aufweist.

2. Vorrichtung nach Anspruch 1, **dadurch gekennzeichnet, daß** der Wärmetauscher einen flachen kreisförmigen isolierten Folienheizer (14) aufweist, der an einer Trägerplatte (8) befestigt ist, die ihrerseits durch ein radial zwischen der Platte (8) und einer zweiten Platte (10) vom Zentrum zum Rand oder umgekehrt fließendes Fluid gekühlt wird, wobei die Kühleffizienz des Fluids nicht verändert wird und die Heizeffizienz des Heizers geregelt wird, um die Temperatur der im Gefäß befindlichen Reaktionsmasse zu regeln.

3. Vorrichtung nach Anspruch 2, **dadurch gekennzeichnet, daß** die adiabatische Abschirmung eine abgedeckte zylindrische Kammer (12, 13) aufweist, die durch einen gebondeten Folienheizer (14) umgeben ist und gleichförmig durch unter Druck stehendes, von verschiedenen, die adiabatische Abschirmung umgebenden Anschlüssen (15) fließendes Gas gekühlt wird, wobei die Abstimmung zwischen Heizen und Kühlen die Temperatur innerhalb der Kammer auf gleichem Wert wie die Temperatur der Reaktionsmasse hält.

4. Vorrichtung nach Anspruch 3, **dadurch gekennzeichnet, daß** die Temperatur eines oder mehrerer chemischer Förderströme mit der Reaktionsmasse bereits innerhalb des Gefäßes unter Einsatz rohrförmiger Wärmetauscher ins Gleichgewicht gebracht wird, die an der Innenfläche der adiabatischen Abschirmung in enger thermischer Verbindung mit den Heiz- und Kühleinrichtungen der adiabatischen Anschirmung angebracht sind.

5. Vorrichtung nach Anspruch 2, **dadurch gekennzeichnet, daß** das Kühlfluid von einem Reservoir Zugeführt wird, das mit einem Umwälzsystem und einer Temperaturregeleinrichtung mit einem Temperatursensor, einem elektrischen Heizer und einem Kühlsystem, die geeignete Einrichtungen zur genauen Regelung der Temperatur des umlaufenden Fluids bilden, ausgestattet ist.

6. Vorrichtung nach Anspruch 1, **dadurch gekennzeichnet, daß** ein übermäßiger Druckaufbau durch eine zweistufige Vorrichtung abbaubar ist, die

a. ein kleines, in der Abdeckung (2) des Reaktionsgefäßes (1) angeordnetes einstellbares Ventil, das eine Entlüftungsöffnung mit einem Durchmesser von 0,317 cm zur Entlastung kleiner überdrücke bildet, und

b. eine zusammendrückbare Halteeinrichtung für die Abdeckung des Reaktionsgefäßes aufweist, die federbelastete Halteglieder (29) für die Abdeckung (2) und eine Balgenkupplung (30) für die Rührerwelle (6) umfaßt, die zusammengefaßt eine vertikale Verlagerung der Abdeckung (2) und der Welle (6) für die Bildung der größtmöglichen Entlüftungsöffnung für den Abbau großer überdrücke und die Gewährleistung höchster Sicherheit während des Betriebs des Kalorimeters ermöglichen.

11

EP 0 170 713 B1

7. Verfahren zum Betreiben der Vorrichtung gemäß Anspruch 1, bei dem die Temperaturdifferenz zwischen dem Ölreservoir und der chemischen Reaktionsmasse durch einen mit einer Temperaturregeleinrichtung und einem Umwälzsystem zusammenarbeitenden Wärmetauscher konstant gehalten wird, wobei die Temperatur der Reaktionsmasse entweder konstant gehalten oder zu einem Folgeverhalten gemäß einer vorgegebenen Veränderung gezwungen wird, wobei währenddessen die Reaktionswärme und die Reaktionskinetik durch die proportionale Einstellung des Leistungsverlustes in dem in dem Wärmetauscher angeordneten elektrischen Steuerheizer gemessen werden.

8. Verfahren zum Betreiben der Vorrichtung gemäß Anspruch 1, wobei die elektrische Verlustleistung, $q_h$, in dem in dem Wärmetauscher angeordneten Steuerheizer proportional zu dem mit Vorzeichen versehenen Quadrat des Temperaturfehlersignals, $\Delta T$, zuzüglich des zeitlichen Integrals des mit Vorzeichen versehenen Temperaturfehlersignals geregelt wird, wobei das Temperaturfehlersignal die Differenz zwischen der momentanen Temperatur der chemischen Reaktionsmasse und dem spezifischen eingestellten Temperatursollwert gemäß folgender Beziehung bildet:

$$q_h = K_1 \cdot \Delta T \cdot |\Delta T| \quad + \quad K_2 \int_0^\infty \Delta T \cdot |\Delta T| \, dt,$$

wobei $K_1$ und $K_2$ Konstanten unterschiedlicher Größe für positive und negative Temperaturfehlersignale und $|\Delta T|$ den Absolutwert des Temperaturfehlersignals bezeichnen.

12

EP 0 170 713 B1

FIG. 1

FIG.2

14

FIG. 3

FIG. 4

FIG. 5

FIG.6